# EUROPEAN PATENT SPECIFICATION

(11) **EP 2 113 602 B1**
(45) Date of publication and mention of the grant of the patent: **21.03.2012**
(21) Application number: 08162660.8
(22) Date of filing: 20.08.2008
(51) Int. Cl.: D06F 35/00, D06F 39/00

(54) **Washing machine with a waterway system**
Waschmaschine mit Wasserlaufsystem
Machine à laver dotée d'un système de voie d'eau

(30) Priority: 29.04.2008 CN 200810094396
(43) Date of publication of application: 04.11.2009
(73) Proprietor: Haier Group Corporation, Qingdao, Shandong 266101 (CN); Qingdao Haier Washing Machine Co. Ltd., Qingdao, Shandong 266101 (CN)
(72) Inventor: Cao, Chunhua, 266101 Quingdao Shandong (CN); Lv, Peishi, 266101 Quingdao Shandong (CN); Xu, Sheng, 266101 Quingdao Shandong (CN); Gai, Song, 266101 Quingdao Shandong (CN); Chen, Yuling, 266101 Quingdao Shandong (CN); Li, Zeheng, 266101 Quingdao Shandong (CN)
(74) Representative: Beck & Rössig European Patent Attorneys

(56) References cited:
- EP-A- 0 083 740
- EP-A- 0 146 184
- US-A1- 2005 252 538

## Description

### TECHNICAL FIELD OF THE INVENTION

The present invention relates to a washing machine with a waterway system.

### BACKGROUND OF THE INVENTION

Prior art washing machines make use of water combined with scour which usually brings heavy pollution to clean clothes. There has been provided a method of using strongly basic electrolysis water along with a modifier liquid in the washing process to reduce pollution. Several references concerning this method are as follows:

US 2005/252538 A1 discloses a washing system for cleaning comprising at least one inlet capable of fluid communication with feed water and at least one treatment zone comprising a water softening zone and an electrolysis zone in fluid communication with the at least one inlet.

JP2003220296 discloses a washing apparatus, e.g. drum-type washing machine, having a partition wall made of non-conductive material arranged in an electrolysis tank thereby forming segmented chambers which have respective electrodes.

JP2003024680 discloses a washing machine, e.g. drum-type washing machine, consisting of an electrolyzer which includes lower and upper water flow paths connected to an electrolytic cell and a wash tub respectively.

JP2003079560 discloses an in-home dishwasher having an electrolyzer which produces electrolyzed water to perform washing and bleaching after completion of a dish washing operation.

JP2002524256T discloses a water producing apparatus for deodorization and cleaning applications comprising an electrolyzer and two end plates arranged at both ends of the electrolyzer.

JP2000027263 discloses a sanitary washing machine for sterilizing toilet fixture. It has an electrolyte storage unit, an electrolysis unit carrying electrolyte and an electrode pair and a discharge unit for discharging treated water.

JP2000014986 discloses a water supply system of a washing machine. It uses a metal ion desorption device with capture and release units to capture metal ions and release into tap water supplied into a washing tub from a tap water feed mouth.

But hard water and long-time frequent use may shorten the service life of an electrolyzer, thus the technical scheme to electrolyze softened water is provided to improve the softness of clothes; the typical scheme is published as below:

CN99800057 discloses washing items are washed, simultaneously washing water comprising alkali metal ion and at least one of carbonate ion and bicarbonate ion is softened. The washing water before being softened is obtained by electrolysing an aqueous solution of sodium hydrogen carbonate having a pH of 9.5 or more and an electric conductivity of 150mS/m or more. The softened washing water has a total hardness of 40ppm or less.

The washing method of CN99800057 has the technical feature: washing water comprising alkali metal ion and at least one of carbonate ion and bicarbonate ion is softened in one hand, and the washing items are washed simultaneously in the other hand.

Thus the above washing water in the washing chamber is softened using the following method: washing items and washing water with alkali metal ion and at least one of carbonate ion and bicarbonate ion are together bought into the washing chamber to bond the calcium ion or magnesium ion with the carbonate ion or bicarbonate ion and separate out the calcium carbonate and calcium bicarbonate to soften the washing water.

Apparently, the technical scheme disclosed in this patent is to make use of the electrolysis water as the washing water, meantime adding corresponding materials to finish the softening process. Additionally, the metal ions in the softener play the assistant role in the washing process.

CN00110127 discloses an electrochemical washing machine including a barrel and a water container respectively acting also as carriers of two electrodes, an electrochemical mechanism and an electric controller. It has the advantages of making the washing process, which includes the steps of softening water, emulsifying and decomposing oil dirt, rinse and disinfection, softening clothing and sizing, saving in time and cost by means of electrophoresis and electrolysis. The especially electrochemical detergent has low cost, less consumption and less environmental pollution.

DE3640881 discloses a water softening system for washing machines and dishwashers with an integral electrochemical cell producing a regenerating electrolyte, especially involving an ion exchanger of a water softening installation is regenerated by using an electrolyte. The electrolyte is produced by an electrochemical reaction in the working water of the water softening installation itself instead of adding an electrolyte. The water supply to the water softening unit has a T-piece leading to a valve and a line to the washing medium container. A three-way valve can be opened towards line so that soft water can be passed through the washing medium in through line to the washing machine or dishwasher. After the electrochemical cell in the unit has been activated, the water, enriched with hardness causing salts, can be discharged via valve to the lines. This saves the necessity of having to dispose of water enriched with the substance which causes the hardness. The regeneration is fully automatic.

The service lives of the softening device with complicated structure used in the technical scheme of the above patent references are not long enough, but going against the large scale industrial production.

The present invention is provided under the above background.

### SUMMARY OF THE INVENTION

The purpose of the present invention is to provide a washing machine with an improved waterway system.

The above object is achieved by a washing machine according to claim 1. Advantageous embodiments are laid down in further claims.

The inventive washing machine has an improved waterway system with a softening-electrolysis waterway and regeneration-resin waterway.

A washing machine with improved waterway system, said washing machine is comprising of the outer drum , inner drum, water-inlet system, water-outlet system and driving device along with controller, wherein, said water-inlet system is composed of softening-electrolysis waterway including softening device, electrolyzer and several sets of pipes; said water-inlet system is also composed of modifier-liquid measured waterway including metering valve, modifier-liquid supplier and several sets of pipes; said water-inlet system is further composed of ion-exchange-resin regeneration waterway including regenerated-brine device and several sets of pipes.

The inlet of said water-inlet system is mounted with four-pass water-inlet valve, one end of which is connected to tap water inlet, the other end is set four controlled outlets connect to each end of four pipes respectively, wherein, one of said four pipes is connected to said modifier-liquid measured waterway, another one is connected to influent groove, the third one is connected to said softened electrolysis waterway, the last one is connected to said ion-exchange-resin regeneration waterway.

Said modifier-liquid measured waterway is comprising metering valve, modifier-liquid supplier and several sets of pipes, the metering valve is connected to the modifier-liquid supplier by pipe, the inlet of metering valve is connected to said four-pass water-inlet valve by pipe, two outlet of metering valve are respectively connected to influent groove and said water-outlet system by pipes.

Said softening-electrolysis waterway is comprising softening device, electrolyzer and several sets of pipes, the water-inlet pipe of softening device is connected to four-pass water-inlet valve, the softened-water outlet of softening device is connected to electrolyzer, the wastewater outlet is connected to said water-outlet system by pipe, alkaline-electrolysis water outlet of electrolyzer is connected to influent groove by pipe, acid-electrolysis water outlet is connected to said water-outlet system by siphon.

Said ion-exchange-resin regeneration waterway comprises regenerated-brine device and several sets of pipes, the water inlet of regenerated-brine device is connected to the four-pass water-inlet valve by pipe, the regenerated-brine outlet is connected to the regenerated-brine inlet of softening device, the overflow port is connected to said water-outlet system.

Said metering valve consists of inlet valve used for controlling the connection status of influent groove, modifier-liquid valve used for controlling the connection status of modifier-liquid supplier with metering valve and drain valve used for controlling the connection to said water-outlet system, air valve is set on the top of modifier-liquid supplier to control the air circulation.

Resin-storage chamber is set inside the softening device, inside the resin-storage chamber resin is held by bracket, said softened-water outlet and regenerated-brine inlet are set on the top of the softening device, close to the regenerated-brine inlet there set a floating ball used to shut down the regenerated-brine inlet, check valve is set at the waste-water outlet which is set on the lower part of the softening device, water-inlet pipe is set at the bottom of the softening device or the side close to the bottom.

Said regenerated-brine device comprises case, salt-sturage through located in the upper space and brine-dissolved chamber formed by the remaining space of the regenerated-brine device, the water inlet and overflow port are respectively set on the two sides, the vertical height of above water inlet is higher than above overflow port, regenerated-brine outlet is set on the bottom of the case, at least one permeable hole is located around the salt-storage through, filter screen covers on said permeable hole.

When said softening-electrolysis waterway is at work, water from said four-pass water-inlet valve gets into the softening device by pipe and gets touch with the ion-exchange-resin , rising water level to lift the floating ball to close regenerated-brine inlet, softened water passes through the softened-water outlet and is electrolyzed inside the electrolyzer; acid-electrolysis water is drained to the water-outlet system by siphon, alkaline-electrolysis water reaches the influent groove by alkaline-electrolysis water outlet, further flows into the inner drum of the washing machine.

Check valve is mounted at the wastewater outlet of softening device, alkaline-electrolysis water outlet and wastewater outlet of the electrolyzer is of pressure, when the drainage function of the acid-electrolysis water is of no effect, the acid-electrolysis water would be prevent from getting into the softening device and electrolyzer.

With combination of alkaline-electrolysis water, modifier-liquid measured waterway is provided in this present invention, modifier-liquid could be sent to the influent groove by the modifier-liquid measured waterway after being measured.

Said modifier-liquid measured waterway consists of metering valve, this metering valve is composed of inlet valve, modifier-liquid valve and drain valve, the working scheme is as follow: open inlet valve firstly, then water from the four-pass water-inlet valve would clean the valve chamber of metering valve, wastewater is drained from drain valve; further open air valve and modifier-liquid valve, modifier-liquid from the modifier-liquid supplier to metering valve is measured by this valve, close said air valve and modifier-liquid valve, stop providing modifier- liquid, open inlet valve again to rush the measured modifier-liquid into the influent groove by pipe. Said mudifier-liquid combined with alkaline-electrolysis water form good condition for washing.

Constant quantity and concentration brine in the said ion-exchange-resin regeneration waterway provided by the present invention to meet the requirement of regeneration of ion-exchange-resin to satisfy the effect of softening, it could achieve that .ion-exchange-resin could be regenerated by opening brine valve to send regenerated-brine into softening device.

When said ion-exchange-resin regeneration waterway is at work, water from the four-pass water-inlet valve would be sent from regenerated-brine inlet to brine-dissolved chamber by pipe, said brine-dissolved chamber is the lower space under the salt-storage through inside the case, overflow port is set on the side with lower vertical location than water inlet set on the other side, redundant water would be drained from the overflow port, water in brine-dissolved chamber gets touch with the salt through the mesh of the filter screen covering on the permeable holes which set on the bottom and side of salt-storage through in a predetermined period to form brine with predetermined concentration, then said brine with predetermined concentration would reach softening device by regenerated-brine outlet and regenerated-brine inlet after opening brine valve

The floating ball will not shut down the regenerated-brine inlet because of the low water level when water from regenerated-brine device gets immersing ion-exchange-resin, thus ion-exchange-resin is immersed in brine and regenerated, after the ion-exchange-resin is regenerated in a predetermined period, drain wastewater from the wastewater outlet.

Upper outfall is set in the water-outlet system; the bottom of the regenerated-brine device is not lower than the height of upper outfall.

The elbow position of siphon and/or the location of overflow port of regenerated-brine device are/is higher the water level inside inner drum.

To avoid inverted siphon caused by the broken of pipes, a check valve is mounted on the pipe between four-pass water-inlet valve and softening device, and/or on the pipe between four-pass water-inlet valve and metering valve, thus avoid the pollution of tap water caused by the inverted siphon of mixture of modifier-liquid and water.

Electromagnetic valve is assembled between electrolyzer and softened-water outlet, after the ion-exchange-resin is regenerated, open water inlet to drain wastewater from wastewater outlet by pressure, close the electromagnetic valve to hold back wastewater from the electrolyzer.

Drainage vessel set on the pipe between the overflow port and water-outlet system is connected to the pipe between the wastewater outlet of softening device and water-outlet system.

A better softening electrolysis system used in the washing machine is provided in the present invention in the above technical scheme; this system would greatly improve the service life of softening device with simple structure and is suitable for large scale industrial production.

The further specification of embodiment according to the drawings is as follow.

### BRIEF DESCRIPTION OF THE DRAWINGS

- Fig. 1: is a schematic view of a waterway system of a washing machine according to the present invention;
- Fig. 2: is a partial detailed schematic view of the waterway system close to the metering valve;
- Fig. 3: is a partial detailed schematic view of the waterway system close to the modifier-liquid supplier; and
- Fig. 4: is a partial detailed schematic view of the waterway system close to the softening device.

### DESCRIPTION OF EMBODIMENTS

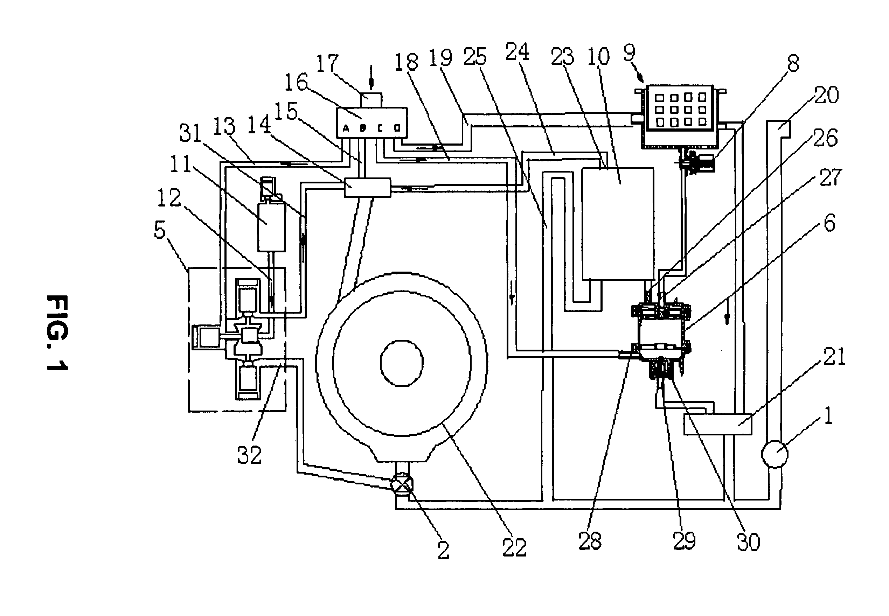

As shown in Fig. 1 to 4, the present invention provides a washing machine with an improved waterway system. Said washing machine comprises an outer drum, an inner drum, a water-inlet system, a water-outlet system and a driving device as well as a controller. The water inlet system is arranged between a water inlet of the washing machine, i.e. an inlet-valve 16 for tap water and an influent device leading to a washing compartment of the washing machine. In Fig. 1 the influent device is an influent groove 14.

The water-inlet system comprises a softening-electrolysis waterway C including a softening device 6, an electrolyzer 10 and several sets of pipes. The water-inlet system also comprises a modifier-liquid measured waterway A including a metering valve 5, a modifier-liquid supplier 11 and several sets of pipes. The water-inlet system further comprises an ion-exchange-resin regeneration waterway D including a regenerated-brine device 9 and several sets of pipes.

Said modifier-liquid measured waterway A comprises metering valve 5 modifier-liquid supplier 11 and several sets of pipes 12, 13, 31, 32, metering valve 5 is connected to the modifier-liquid supplier 11 by pipe 12, the inlet of metering valve 5 is connected to said pipe 13, two outlets of metering valve 5 are respectively connected to the influent groove 14 by pipe 31 and said water-outlet system by pipe 32. Said metering valve 5 consists of inlet valve 35 used for controlling the connection status of pipe 31 and influent groove 14, modifier-liquid valve 36 used for controlling the connection of modifier liquid supplier 11 and metering valve 5 by pipe 12 and drain valve 37 used for controlling the connection of pipe 32 and water-outlet system, air valve 33 is set on the top of modifier-liquid supplier 11 for the air circulation.

Said softening-electrolysis waterway C comprises softening device 6, electrolyzer 10 and several sets of pipes 18, 24, 25, 28, 29, water-inlet pipe 28 of softening device 6 is connected to pipe 18, softened-water outlet 26 of softening device 6 is connected to electrolyzer 10, wastewater outlet 46 is connected to said water-outlet system by pipe 29, alkaline-electrolysis water outlet 23 of electrolyzer 10 is connected to influent groove 14, acid-electrolysis water outlet of electrolyzer 10 is connected to said water-outlet system by siphon 25. Resin-storage chamber 45 is set inside softening device 6, inside the resin-storage chamber 45 resin is held by bracket 7, said softened-water outlet 26 and regenerated-brine inlet 27 are set on the top of the softening device 6, inside the resin-storage chamber 45 close to the regenerated-brine inlet 27 there set a floating ball 44 used to shut down the regenerated-brine inlet 27, check valve is set close to the waste-water outlet 46 which is set on the lower part of the softening device 6, water-inlet pipe 28 is set at the bottom or the side close to the bottom of softening device 6.

Said ion-exchange-resin regeneration waterway D comprises regenerated-brine device 9 and several sets of pipes, the water inlet 42 of regenerated-brine device 9 is connected to pipe 19, regenerated-brine outlet 40 is connected to the regenerated-brine inlet 27 of softening device 6 by pipe; overflow port 39 is connected to said water-outlet system. Said regenerated-brine device 9 comprises case 43, salt-storage through 38 located in the upper part and brine-dissolved chamber 41 formed by the remaining space of the regenerated-brine device 9, the water inlet 42 and overflow port 39 are respectively set on two sides of case 43, the vertical height of water inlet 42 is higher than overflow port 39, regenerated-brine outlet 40 is set on the bottom of the case 43, at least one permeable hole 4 is located around the salt-storage through 38, filter screen 3 is covering on the said permeable hole 4.

A further waterway B connects valve 16 and influent groove 14.

The using method of the waterway system of the washing machine provided by the present invention is as follows: As shown in Fig. 1, four-pass water-inlet valve 16 is assembled at the water inlet of the water-inlet system, one end of four-pass water-inlet valve 16 is connected to tap water inlet 17, the other end is set four controlled outlets connected to each end of four pipes 13, 15, 18, 19 respectively.

The other end of pipe 13 is connected to metering valve 5.

The other end of pipe 15 is connected to influent groove 14.

The other end of pipe 18 is connected to softening device 6.

The other end of pipe 19 is connected to regenerated-brine device 9.

Wherein drain pipe 32 of metering valve 5 is connected to drainage pump 1 by drain valve 2. Acid-electrolysis water siphon 25 and drainage vessel 21 are respectively connected to drainage pump 1 in order to open the drainage pump 1 to drain wastewater by the upper outfall 20 if necessary.

If users want to make use of the detergent or scour, it will pre-store constant detergent inside the detergent chamber in the influent groove 14, water from the port 16A of four-pass water-inlet valve gets into influent groove 14 by pipe 13 and inlet valve 35 to rush said detergent or scour into the inner drum, meanwhile measured water is repeatedly provided to inner drum to finish the washing process of the whole washing, rinsing and dehydration according to the grogram.

If a user wants to make use of alkaline-electrolysis water combined with modifier-liquid instead of said detergent or scour, the program would be turned into another pre-proceeding to operate.

At the beginning of washing process, the controller of the washing machine would judge the quality of the tap water used.

After water passing softening device 6, the exchange of ion in the resin is reduced if the water quality is good enough, it is no need to take the replacement of ion-exchange-resin; otherwise, it is necessary to take the placement process. Water should be softened by softening device 6 before it goes into electrolyzer 10, it will effectively prolong the service life of the electrolyzer 10.

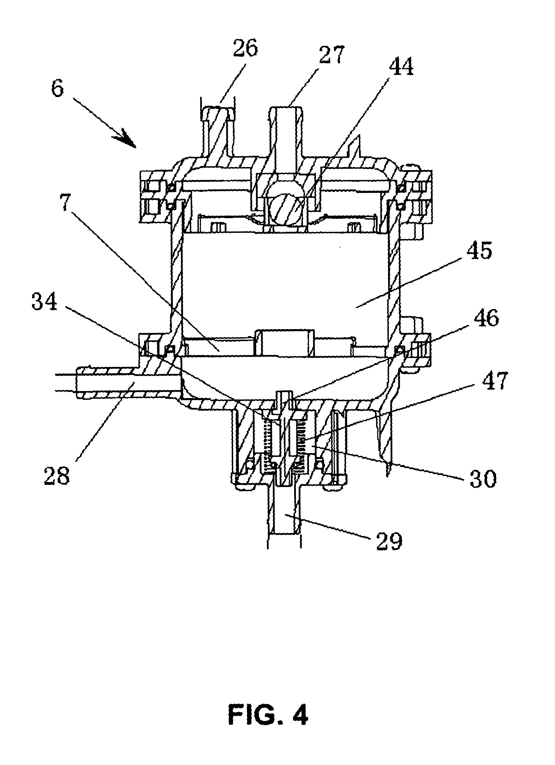

The working principle of softening device 6 is as follow, as shown in Fig 1 and Fig. 4, resin-storage chamber 45 is set inside the softening device 6, to soften water, water from four-pass water-inlet valve 16 would goes into the space under bracket 7 by water-inlet pipe 28, as the water level is gradually rising, water through the holes on the bracket 7 would get in touch with resin held by bracket 7 and be softened, when the water lifts floating ball 44 to plug regenerated-brine inlet 27, softening water would flow into electrolyzer 10 by softened-water outlet 26, but never go into regenerated-brine device 9 by regenerated-brine inlet 27.

As shown in Fig. 1, softened water from softening device 6 is electrolyzed inside electrolyzer 10, said electrolyzer 10 is dissepiment electrolyzer, and alkaline-electrolysis water and acid-electrolysis water would be formed at the two sides of dissepiment.

Acid-electrolysis water would be drained by siphon after the accumulation of acid-electrolysis water reaches a level.

After the accumulation of alkaline-electrolysis water reaches a level, alkaline-electrolysis water would goes into the influent groove 14 by alkaline-electrolysis water outlet 23 and pipe 24, and then reaches the inner drum of washing machine 22.

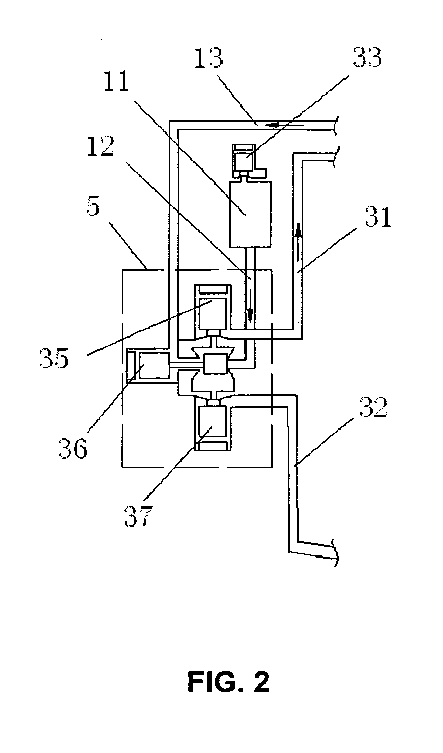

As shown in Fig. 2, effect of lower wash would be caused by only using alkaline-electrolysis water, thus modifier-liquid supplier 11 is set in the improved waterway provided in the present invention, wherein modifier-liquid would be added into washing machine by metering valve 5 to improve the washing effect. The modifier-liquid is a kind of common surfactant which is used in combination with alkaline-electrolysis water to improve the washing effect. The modifier-liquid reduces the surface tension of washing water and scum to bundle filth down the bottom of the drum of the washing machine 22.

The process of measuring modifier-liquid is as follows:

Metering valve 5 is made up of inlet valve 35, modifier-liquid valve 36 and drain valve 37, they are connected to pipe 13, 31, 32, 12 respectively, the other end of pipe 12 is connected to the outlet of modifier-liquid supplier 11, the vertical position of said modifier-liquid supplier 11 is higher than metering valve 5, air valve 33 is set on the top of the modifier-liquid supplier 11. To avoid inverted siphon caused by the broken of pipes, check valve is set on pipe 13, water from four-pass water-inlet valve 16 goes into metering valve 5 by check valve, meanwhile mixture of modifier-liquid and water in the metering valve 5 cannot draw back to tap water without pollution.

When using the metering valve 5, open inlet valve 35 firstly, then water from the four-pass water-inlet valve 16 goes into and cleans the valve chamber of metering valve by pipe 13, wastewater is drained from drain valve 37; further open air valve 33 and modifier-liquid valve 36, modifier-liquid from the mudifier-liquid supplier 11 to metering valve 5 is measured by the valve, close said air valve 33 and modifier-liquid valve 36, stop providing modifier-liquid, open inlet valve 35 again to rush the measured modifier-liquid into the influent groove 14 by pipe 31. Said modifier-liquid combined with alkaline-electrolysis water and washing water can clean clothes in washing machine.

Generally, after a term of working, the resin in softening device 6 would be of no effect, and would be needed to regenerate by brine with constant concentration.

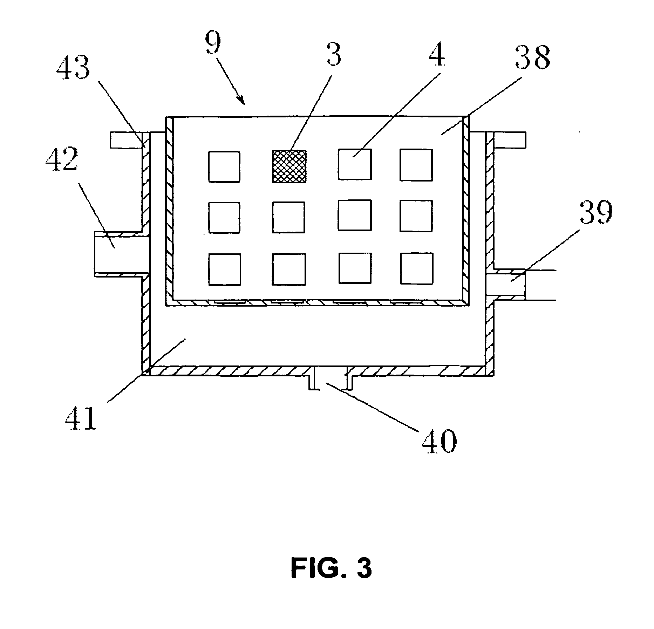

The process of resin regeneration in softening device 6 is as follow, at the beginning, prepare regenerated-brine with constant concentration, as shown in Fig. 1 and Fig. 3, water via pipe 19 from four-pass water-inlet valve 16 gets into brine-dissolved chamber 41 by water inlet 42, said brine-dissolved chamber 41 is formed by space between the bottom of case 43 and held salt-storage through 38, overflow port 39 is set on the side of case 43 with lower vertical position than water inlet 42 which is set on the other side, redundant water would be drained from overflow port 39 after stopping inflow, meantime, there will be constant water in brine-dissolved chamber 41, water would get touch with salt in predetermined period by the mesh of filter screen 3 set on the side and bottom of salt-storage through 38 to form brine with predetermined concentration, open brine valve 8, brine with predetermined concentration gets into softening device 6 by regenerated-brine outlet 40 and regenerated-brine inlet 27.

As shown in Fig. 4, because of the lower water level, floating ball 44 cannot plug regenerated-brine inlet 27, ion-exchange-resin in softening device would be immersed in brine and regenerated, when the amount of brine reaches a certain level, by the gravity of itself, it would press down and open the valve core 34 which is closed by spring 47 in common. Wastewater would be drained from wastewater outlet 46 by pipe 29. To avoid the inverted siphon caused by the broken of pipes, check valve is set on pipe 18, water from four-pass water-inlet valve 16 would go into softening device 6 by check valve, but water from softening device 6 could not get back to top water source causing pollution.

Electromagnetic valve (not shown in Figs) is assembled between electrolyzer 10 and softening-water outlet 26, after the ion-exchange-resin is regenerated, open water inlet to drain wastewater from wastewater outlet 46 by pressure, close the electromagnetic valve to hold back wastewater from the electrolyzer 10.

The improved waterway provided in the present invention is used in the washing machine with upper drainage system, said height of upper outfall 20 is about 80cm, in the technical scheme of the present invention, we could find:

Check valve is set on the wastewater outlet 46 of softening device 6, and alkaline-electrolysis water outlet 23 and pipe 25 are of pressure, thus when the drainage function of the acid-electrolysis water is of no effect, the acid-electrolysis water would be prevent from getting into the softening device 6 or electrolyzer 10.

In the present invention, acid-electrolysis water could not get back to regenerated-brine device 9 because the bottom of regenerated-brine device 9 is the higher location than upper outfall 20.

Wastewater could not go back the washing machine as the close of drain valve 2.

It would prolong the service life of softening device 6 that the check valve prevents the water drained from washing machine from getting into softening device 6 after opening drain valve in the process of washing, rinsing and dehydration.

Acid wastewater from electrolyzer 10 cannot reach electrolyzer 10 as the elbow position of siphon 25 set on the acid wastewater outlet is higher than the water level in the inner drum of washing machine.

As the position of overflow port 39 of regenerated-brine device 9 is higher than water level inside the inner drum of washing machine, wastewater cannot get into electrolyzer 10.

Drainage vessel 21 set on the pipe between the overflow port 39 and water-outlet system is connected to the pipe 29 between the wastewater outlet 46 of softening device 6 and water-outlet system.

A better softening-electrolysis system used in the washing machine is provided in the present invention in the above technical scheme, this system would greatly improves the service life of a softening device with a simple structure and is suitable for large scale industrial production.

### LIST OF REFERENCE NUMBERS

- 1: drainage pump
- 2: drain valve
- 3: filter screen
- 4: permeable hole
- 5: metering valve
- 6: softening device
- 7: bracket
- 8: brine valve
- 9: regenerated-brine device
- 10: electrolyzer
- 11: modifier-liquid supplier
- 12: pipe
- 13: first pipe
- 14: influent groove
- 15: second pipe
- 16: four-pass water-inlet valve
- 17: tap water inlet
- 18: third pipe
- 19: forth pipe
- 20: upper outfall
- 21: drainage vessel
- 22: washing machine
- 23: alkaline-electrolysis water outlet
- 24: pipe
- 25: acid-electrolysis water siphon
- 26: softened-water outlet
- 27: regenerated-brine inlet
- 28: water-inlet pipe
- 29: pipe
- 30: check valve
- 31: pipe
- 32: pipe
- 33: air valve
- 34: valve core
- 35: inlet valve
- 36: modifier-liquid valve
- 37: drain valve
- 38: salt-storage through
- 39: overflow port
- 40: regenerated-brine outlet
- 41: brine-dissolved chamber
- 42: water inlet
- 43: case
- 44: floating ball
- 45: resin-storage chamber
- 46: wastewater outlet
- 47: spring

## Claims

1. A washing machine (22) with a waterway system arranged between a water inlet and an influent device, said water-inlet system **characterised by** further comprising:
- a suftening-electrolysis waterway (C) including a softening device (6) for softening water and an electrolyzer(10) receiving water from said softening device (6),
- a modifier-liquid measured waterway (A) including a metering valve (5) and a mudifier-liquid supplier (11), and
- an ion-exchange-resin regeneration waterway (D) including a regeneration-brine device (9) for supplying brine to said softening-electrolysis waterway (C).

2. Washing machine according to claim 1, **characterized in that** the inlet of said water-inlet system is mounted with a four-pass water-inlet valve (16), one end of which is connectable to a tap water inlet (17), the other end of the valve has four controlled outlets that connect to four pipes (13, 15, 18, 19), respectively, wherein a first pipe (13) is connected to said modifier-liquid measured waterway (A), a second pipe (15) is connected to an influent groove (14), a third pipe (18) is connected to said softened electrolysis waterway (C), and a forth pipe (19) is connected to said ion-exchange-resin regeneration waterway (D).

3. Washing machine according to claim 1 or 2, **characterized in that** said modifier-liquid measured waterway (A) comprises said metering valve (5) and said modifier-liquid supplier (11) and several sets of pipes, said metering valve (5) is connected to the modifier-liquid supplier (11) by a pipe (12), a inlet of metering valve (5) is connected to said first pipe (13), two outlet of metering valve (5) are respectively connected to influent groove (14) by pipe (31) and said water-outlet system by a pipe (32).

4. Washing machine according to claim 2 or 3, **characterized in that** said softening-electrolysis waterway (C) comprises said softening device (6) and said electrolyzer (10) and several sets of pipes, wherein a water-inlet pipe (28) of said softening device (6) is connected to said third pipe (18), a softened-water outlet (26) of said softening device (6) is connected to said electrolyzer (10), a wastewater outlet (46) is connected to said water-outlet system by a pipe (29), an alkaline-electrolysis water outlet (23) of said electrolyzer (10) is connected to said influent groove (14) by a pipe (24), an acid-electrolysis water outlet of said electrolyzer (10) is connected to said water-outlet system by a siphon (25).

5. Washing machine according to claim 2, 3 or 4, **characterized in that** said ion-exchange-resin regeneration waterway (D) comprises said regeneration-brine device (9) and several sets of pipes, a water inlet (42) of regenerated-brine device (9) is connected to said forth pipe (19), a regenerated-brine outlet (40) is connected to the regenerated-brine inlet (27) of said softening device (6), and an overflow port (39) is connected to said water-outlet system.

6. Washing machine according to one of claims 3 to 5, **characterized in that** the metering valve (5) comprises an inlet valve (35) for controlling the connection status of influent groove (14) and a pipe (31), a modifier-liquid valve (36) for controlling the connection status of a pipe (12) and said modifier-liquid supplier (11) with said metering valve (5) and a drain valve (37) for controlling the connection status of a pipe (32) and a water-outlet system, and wherein an air valve (33) is set on the top of said modifier-liquid supplier (11) to control air circulation.

7. Washing machine according to one of claims 1 to 6, **characterized in that** a resin-storage chamber (45) is set inside the softening device (6), resin is held by a bracket (7) inside the resin-storage chamber (45), said softened-water outlet (26) and regenerated-brine inlet (27) are set on the top of the softening device (6), a floating ball (44) for shutting down the regenerated-brine inlet (27) is arranged to close to the regenerated-brine inlet (27), a check valve is arranged at the wastewater outlet (46) which is arranged on the lower part of the softening device (6), a water-inlet pipe (46) is arranged on the bottom of the softening device (6) or the side close to the bottom.

8. Washing machine according to one of claims 1 to 7, **characterized in that** said regeneration-brine device (9) comprises a case (43), a salt-storage through (38) located in the upper space and a brine-dissolve chamber (41) formed by the remaining space of the regenerated-brine device (9), wherein a water inlet (42) and an overflow port (39) are respectively set on the two sides of the case (43), a vertical height of above water inlet (42) is higher than above overflow port (39), regenerated-brine outlet(40) is arranged on the bottom of the case (43), at least one permeable hole (4) is located around the salt-storage through (38), and a filter screen (3) covers said permeable hole (4).

9. Washing machine according to one of claims 1 to 8, **characterized in that** an upper outfall (20) is arranged in an water-outlet system, the bottom of the regeneration-brine device (9) is not lower than the height of upper outfall (20).

10. Washing machine according to one of claims 1 to 9, **characterized in that** an elbow position of a siphon (25) and/or the location of an overflow port (39) of said regenerated-brine device (9) are/is higher than a water level inside an inner drum of the washing machine (22).

11. Washing machine according to one of claims 2 to 10, **characterized in that** a check valve is set on the forth pipe (18) and/or the first pipe (13).

12. Washing machine according to one of claims 4 to 7, **characterized in that** an electromagnetic valve is arranged between said electrolyzer (10) and said softened-water outlet (26).

13. Washing machine according to one of claims 4 to 11, **characterized in that** a drainage vessel (21) set on the pipe between the overflow port (39) and a water-outlet system is connected to the pipe (29) between the wastewater outlet (46) of said softening device (6) and said water-outlet system.

14. Washing machine according to one of claims 1 to 13, **characterized by** an outer drum, an inner drum, a water-inlet system, a water-outlet system and a driving device along with a controller.

## Patentansprüche

1. Waschmaschine (22) mit einem zwischen einem Wassereinlass und einer Zulaufvorrichtung angeordneten Wasserlaufsystem, wobei das Wassereinlasssystem **dadurch gekennzeichnet ist, dass** es weiter umfasst:
- einen Enthärtungs-Elektrolysewasserlauf (C) mit einer Enthärtungsvorrichtung (6) zum Enthärten von Wasser und einem Elektrolyseur (10), der Wasser aus der Enthärtungsvorrichtung (6) erhält,
- ein Modifikator-Flüssigkeits-Dosierwasserlauf (A), der ein Dosierventil (5) und eine Modifikator-Flüssigkeitszufuhr (11) aufweist, und
- ein Ionenaustauscherharz-Regenerationswasserlauf (D), der eine Regenerationssolevorrichtung (9) umfasst, damit Sole zum Enthärtungs-Elektrolysewasserlauf (C) geleitet werden kann.

2. Waschmaschine nach Anspruch 1, **dadurch gekennzeichnet, dass** der Einlass des Wassereinlasssystems mit einem Vier-Wege-Wassereinlassventil (16) montiert ist, dessen eines Ende an einen Einlasswasserhahn (17) angeschlossen werden kann und dessen anderes Ende vier geregelte Ausläufe aufweist, die an vier Rohrleitungen (13, 15, 18, 19) angeschlossen sind, wobei eine erste Rohrleitung (13) an den Modifikator-Flüssigkeits-Dosierwasserlauf (A) angeschlossen ist, eine zweite Rohrleitung (15) an eine Zulaufrinne (14) angeschlossen ist, eine dritte Rohrleitung (18) an den Enthärtungs-Elektrolysewasserlauf (C) angeschlossen ist, und eine vierte Rohrleitung (19) an den Ionenaustauscherharz-Regenerationswasserlauf (D) angeschlossen ist.

3. Waschmaschine nach Anspruch 1 oder 2, **dadurch gekennzeichnet, dass** der Modifikator-Flüssigkeits-Dosierwasserlauf (A) das Dosierventil (5) und die Modifikator-Flüssigkeitszufuhr (11) sowie mehrere Rohrleitungssätze umfasst, das Dosierventil (5) über eine Rohrleitung (12) mit der Modifikator-Flüssigkeitszufuhr (11) verbunden ist, ein Einlass des Dosierventils (5) mit der ersten Rohrleitung (13) verbunden ist und zwei Ausgänge des Dosierventils (5) über eine Rohrleitung (31) mit der Zulaufrinne (14) bzw. über eine Rohrleitung (32) mit dem Wasserauslaufsystem verbunden sind.

4. Waschmaschine nach Anspruch 2 oder 3, **dadurch gekennzeichnet, dass** der Enthärtungs-Elektrolysewasserlauf (C) die Enthärtungsvorrichtung (6), den Elektrolyseur (10) sowie mehrere Rohrleitungssätze aufweist, wobei eine Wassereinlassrohrleitung (28) der Enthärtungsvorrichtung (6) an die dritte Rohrleitung (18) angeschlossen ist, ein Auslauf für enthärtetes Wasser (26) der Enthärtungsvorrichtung (6) an den Elektrolyseur (10) angeschlossen ist, ein Abwasserauslauf (46) über eine Rohrleitung (29) an das Wasserauslaufsystem angeschlossen ist, ein Auslauf für das alkalische Elektrolysewasser (23) des Elektrolyseurs (10) über eine Rohrleitung (24) an die Zulaufrinne (14) angeschlossen ist und ein Auslauf für das saure Elektrolysewasser des Elektrolyseurs (10) über einen Siphon (25) an das Wasserauslaufsystem angeschlossen ist.

5. Waschmaschine nach Anspruch 2, 3 oder 4, **dadurch gekennzeichnet, dass** der Ionenaustauscherharz-Regenrationswasserlauf (D) die Regenrationssolevorrichtung (9) sowie mehrere Rohrleitungssätze umfasst, ein Wassereinlass (42) der Regenerationssolevorrichtung (9) an die vierte Rohrleitung (19) angeschlossen ist, ein Regenerationssoleauslauf (40) an den Regenerationssoleeinlass (27) der Enthärtungsvorrichtung (6) angeschlossen ist und eine Überlauföffnung (39) mit dem Wasserauslaufsystem verbunden ist.

6. Waschmaschine nach einem der Ansprüche 3 bis 5, **dadurch gekennzeichnet, dass** das Dosierventil (5) ein Einlassventil (35) zum Regeln des Verbindungsstatus der Zulaufrinne (14) und einer Rohrleitung (31) aufweist, ein Modifikator-Flüssigkeitsventil (36) zum Regeln des Verbindungsstatus einer Rohrleitung und der Modifikator-Flüssigkeitszufuhr (11) mit dem Dosierventil (5), und ein Entleerungsventil (37) zum Regeln des Verbindungsstatus einer Rohrleitung (32) und eines Wasserauslaufsystems, und wobei ein Luftventil (33) oben an der Modifikator-Flüssigkeitszufuhr (11) angeordnet ist, um die Luftzirkulation zu regeln.

7. Waschmaschine nach einem der Ansprüche 1 bis 6, **dadurch gekennzeichnet, dass** eine Harzspeicherkammer (45) in der Enthärtungsvorrichtung (6) angeordnet ist, das Harz mithilfe einer Befestigungsschelle (7) in der Harzspeicherkammer (45) gehalten wird, der Auslauf für enthärtetes Wasser (26) und der Regenerationssoleeinlass (27) oben an der Enthärtungsvorrichtung (6) angeordnet sind, ein Schwimmkörper (44) zum Verschließen des Regenerationssoleeinlasses (27) so angeordnet ist, dass der Regenerationssoleeinlass (27) verschlossen werden kann, ein Rückschlagventil am Abwasserauslauf (46) angeordnet ist, der sich am unteren Teil der Enthärtungsvorrichtung (6) befindet und eine Wassereinlass-Rohrleitung (46) am Boden der Enthärtungsvorrichtung (6) oder seitlich in Bodennähe angeordnet ist.

8. Waschmaschine nach einem der Ansprüche 1 bis 7, **dadurch gekennzeichnet, dass** die Regenerationssolevorrichtung (9) ein Gehäuse (43) aufweist, ein Salzspeicher (38) im oberen Raum angeordnet ist und eine Sole-Lösungskammer (41) im restlichen Raum der Regenerationssolevorrichtung (9) ausgebildet ist, wobei ein Wassereinlass (42) und eine Überlauföffnung (39) jeweils auf einer Seite des Gehäuses (43) angeordnet sind, eine vertikale Höhe des Wassereinlasses (42) höher als die Überlauföffnung (39) ist, ein Regenerationssoleauslauf (40) am Boden des Gehäuses (43) angeordnet ist, mindestens eine durchlässige Öffnung (4) am Salzspeicher (38) angeordnet ist, und ein Filtersieb (3) die durchlässige Öffnung (4) abdeckt.

9. Waschmaschine nach einem der Ansprüche 1 bis 8, **dadurch gekennzeichnet, dass** in einem Wasserauslaufsystem ein oberer Auslauf (20) vorgesehen ist, und der Boden der Regenerationssolevorrichtung (9) nicht unterhalb des oberen Auslaufs (20) liegt.

10. Waschmaschine nach einem der Ansprüche 1 bis 9, **dadurch gekennzeichnet, dass** eine Kniestückposition eines Siphons (25) und/oder die Position einer Überlauföffnung (39) der Regenerationssolevorrichtung (9) oberhalb des Wasserpegels in einer inneren Trommel der Waschmaschine (22) liegt/liegen.

11. Waschmaschine nach einem der Ansprüche 2 bis 10, **dadurch gekennzeichnet, dass** ein Rückschlagventil an der vierten Rohrleitung (18) und/oder der ersten Rohrleitung (13) vorhanden ist.

12. Waschmaschine nach einem der Ansprüche 4 bis 7, **dadurch gekennzeichnet, dass** ein elektromagnetisches Ventil zwischen dem Elektrolyseur (10) und dem Auslauf für enthärtetes Wasser (26) angeordnet ist.

13. Waschmaschine nach einem der Ansprüche 4 bis 11, **dadurch gekennzeichnet, dass** ein Ablaufgefäß (21), das an der Rohrleitung zwischen der Überlauföffnung (39) und einem Wasserauslaufsystem angeordnet ist, mit der Rohrleitung (29) zwischen dem Abwasserauslauf (46) der Enthärtungsvorrichtung (6) und dem Wasserauslaufsystem verbunden ist.

14. Waschmaschine nach einem der Ansprüche 1 bis 13, **gekennzeichnet durch** eine äußere Trommel, eine innere Trommel, ein Wassereinlasssystem, ein Wasserauslaufsystem und eine Antriebseinrichtung mit einer Steuerung.

## Revendications

1. Machine à laver (22) avec un système de voie d'eau placé entre une entrée d'eau et un dispositif d'affluent, ledit système d'entrée d'eau étant **caractérisé en** comprenant en plus:
- une voie d'électrolyse d'adoucissement (C) comprenant un dispositif d'adoucissement (6) pour adoucir l'eau et un électrolyseur (10) qui reçoit l'eau dudit dispositif d'adoucissement (6),
- une voie mesurée de liquide modificateur (a) comprenant une vanne de dosage (59 et un fournisseur de liquide modificateur (11) et
- une voie de régénération de résine échangeuse d'ions (D) comprenant un dispositif d'eau salée de régénération (9) pour fournir de l'eau salée à ladite voie d'électrolyse d'adoucissement (C).

2. Machine à laver selon la revendication 1, **caractérisée en ce que** l'entrée dudit système d'entrée d'eau est montée avec une vanne d'entrée d'eau à quatre voies (16), dont une extrémité peut être reliée à une entrée d'eau du robinet (17), l'autre extrémité de la vanne ayant quatre sorties contrôlées qui sont respectivement reliées à quatre tuyaux (13, 15, 18, 19), un premier tuyau (13) étant relié à ladite voie mesurée de liquide modificateur (A), un second tuyau (15) étant relié à une rainure d'affluent (14), un troisième tuyau (18) étant relié à ladite voie d'électrolyse d'adoucissement (C) et un quatrième tuyau (19) étant relié à ladite voie de régénération par résine échangeuse d'ions.

3. Machine à laver selon la revendication 1 ou 2, **caractérisée en ce que** ladite voie mesurée de liquide modificateur (A) comprend une vanne de dosage (5) et ledit fournisseur de liquide modificateur (11) par un tuyau (12), une entrée de la vanne de dosage (5) étant reliée audit premier tuyau (13), deux sorties de la vanne de dosage (5) étant respectivement reliées à la rainure d'affluent (14) par un tuyau (31) et ledit système de sortie d'eau par un tuyau (32).

4. Machine à laver selon la revendication 2 ou 3, **caractérisée en ce que** ladite voie d'électrolyse d'adoucissement (C) comprend ledit dispositif d'adoucissement (6) et ledit électrolyseur (10) et plusieurs jeux de tuyaux, un tuyau d'entrée d'eau (28) dudit dispositif d'adoucissement (6) étant relié audit troisième tuyau (18), une sortie d'eau adoucie (26) dudit dispositif d'adoucissement (6) étant reliée audit électrolyseur (10), une sortie d'eau usée (469 étant reliée audit système de sortie d'eau par un tuyau (29), une sortie d'eau d'électrolyse alcaline (239 dudit électrolyseur (10) étant reliée à ladite rainure d'affluent (14) par un tuyau (24), une sortie d'eau d'électrolyse acide dudit électrolyseur (10) étant reliée audit système de sortie d'eau par un siphon (25).

5. Machine à laver selon la revendication 2, 3 ou 4, **caractérisée en ce que** ladite voie de régénération de résine échangeuse d'ions (D) comprend un dispositif d'eau salée de régénération (9) et plusieurs jeux de tuyaux, une entrée d'eau (42) du dispositif d'eau salée régénérée (9) est reliée audit quatrième tuyau (19), une sortie d'eau salée (40) est reliée à l'entrée d'eau régénérée (27) dudit dispositif d'adoucissement (6) et une ouverture de trop-plein (39) est reliée audit système de sortie de l'eau.

6. Machine à laver selon l'une des revendications 3 à 5, **caractérisée en ce que** la vanne de dosage (5) comprend une vanne d'entrée (35) pour contrôler l'état de connexion de la rainure d'affluent (14) et un tuyau (31), une vanne de liquide modificateur (36) pour contrôler l'état de connexion d'un tuyau (12) et ledit fournisseur de liquide modificateur (11) avec ladite vanne de dosage (5) et une vanne de drainage (37) pour contrôler l'état de connexion d'un tuyau (32) et un système de sortie de l'eau et dans lequel une vanne d'air (33) est mise sur le dessus du fournisseur de liquide modificateur (11) pour contrôler la circulation d'air.

7. Machine à laver selon l'une des revendications 1 à 6, **caractérisée en ce qu'**une chambre de stockage de résine (45) est mise à l'intérieur du dispositif d'adoucissement (6), la résine est maintenue par un collier (7) à l'intérieur de la chambre de stockage de résine (45), ladite sortie d'eau adoucie (26) et l'entrée d'eau salée régénérée (27) sont mises sur le dessus du dispositif d'adoucissement (6), une bille flottante (44) pour fermer l'entrée d'eau salée régénérée (27) est arrangée pour fermer vers l'entrée d'eau salée régénérée (27), une vanne de contrôle est arrangée à la sortie d'eau usée (46) qui est arrangée sur la partie inférieure du dispositif d'adoucissement (6), un tuyau d'entrée d'eau (46) est arrangé sur le fond du dispositif d'adoucissement (6) ou sur le côté près du fond.

8. Machine à laver selon l'une des revendications 1 à 7, **caractérisée en ce que** ledit dispositif d'eau salée de régénération (9) comprend un boîtier (43), une cuve de stockage de sel (38) située dans l'espace supérieur et une chambre de dissolution d'eau salée (41) formée par l'espace restant du dispositif d'eau salée régénérée (9), une entrée d'eau (42) et une ouverture de trop-plein (39) étant respectivement mises sur les deux côtés du boîtier (43), une hauteur verticale au dessus l'entrée d'eau (42) est plus haute qu'au dessus de l'ouverture de trop-plein (39), la sortie d'eau salée régénérée (40) est placée sur le fond du boîtier (43), au moins un trou perméable (4) est situé autour de la cuve de stockage de sel (38) et un filtre-tamis (3) couvre le trou perméable (4).

9. Machine à laver selon l'une des revendications 1 à 8, **caractérisée en ce qu'**un canal de fuite supérieur (20) est placé dans un système de sortie d'eau, le fond du dispositif d'eau salée de régénération (9) n'étant pas plus bas que la hauteur du canal de fuite supérieur (20).

10. Machine à laver selon l'une des revendications 1 à 9, **caractérisée en ce qu'**une position de coude d'un siphon (25) et/ou la position d'une ouverture de trop-plein (39) dudit dispositif d'eau salée régénérée (9) sont/est plus haute(s) qu'un niveau d'eau à l'intérieur d'un tambour intérieur de la machine à laver (22).

11. Machine à laver selon l'une des revendications 2 à 10, **caractérisée en ce qu'**une vanne de contrôle est mise sur le quatrième tuyau (18) et/ou sur le premier tuyau (13).

12. Machine à laver selon l'une des revendications 4 à 7, **caractérisée en ce qu'**une vanne électromagnétique est arrangée entre ledit électrolyseur (10) et ladite sortie d'eau adoucie (26).

13. Machine à laver selon l'une des revendications 4 à 11, **caractérisée en ce qu'**un conteneur de drainage (21) arrangé sur le tuyau entre l'ouverture de trop-plein (39) et un système de sortie d'eau est relié au tuyau (29) entre la sortie d'eau usée (46) dudit dispositif d'adoucissement (6) et ledit système de sortie d'eau.

14. Machine à laver selon l'une des revendications 1 à 13, **caractérisée par** un tambour extérieur, un tambour intérieur, un système d'entrée d'eau, un système de sortie d'eau et un dispositif d'entraînement avec un contrôleur.
